# EUROPÄISCHE PATENTSCHRIFT

(11) **EP 1 079 987 B1**
(45) Veröffentlichungstag und Bekanntmachung des Hinweises auf die Patenterteilung: **13.03.2002**
(21) Anmeldenummer: 99936301.3
(22) Anmeldetag: 18.05.1999
(51) Int. Cl.: B60N 2/00, B60N 2/02

(54) **Entnehmbarer Fahrzeugsitz**
Removable motor vehicle seat
Siège automobile amovible

(30) Priorität: 29.05.1998 DE 19825439
(43) Veröffentlichungstag der Anmeldung: 07.03.2001
(73) Patentinhaber: Brose Fahrzeugteile GmbH & Co. KG Coburg, 96450 Coburg (DE); DaimlerChrysler AG, 70322 Stuttgart (DE)
(72) Erfinder: HOFMANN, Jochen, D-96338 Küps (DE); KRÖNER, Gregor, D-96163 Gundelsheim (DE); FRITZ, Karl-Heinz, D-72135 Dettenhausen (DE)
(74) Vertreter: Müller, Wolfram Hubertus, Dipl.-Phys.
(86) Internationale Anmeldenummer: DE9901525
(87) Internationale Veröffentlichungsnummer: WO9962736

(56) Entgegenhaltungen:
- EP-A- 0 558 408
- DE-A- 2 905 235
- DE-A- 4 404 935
- FR-A- 2 769 269

## Beschreibung

Die Erfindung betrifft einen entnehmbaren Fahrzeugsitz nach dem Oberbegriff des Anspruchs 1.

Durch einen Nutzer einfach entnehmbare Fahrzeugsitze erfeuen sich zunehmender Beliebtheit und sind an sich bekannt. Die DE 44 04 935 A1 etwa beschreibt eine Vorrichtung zum Verbinden eines Fahrzeugsitzes mit Lagerelementen am Fahrzeugboden. Eine Verriegelungseinrichtung verschiebt dabei den Fahrzeugsitz beim Entriegeln in eine Entnahmeposition, während beim Einbau des Sitzes die Verriegelungseinrichtung zunächst in einer Freigabestellung und anschließend in eine Verriegelungsstellung überführt wird. Durch geeignete Verbzw. Entriegelungseinrichtungen und Lagerelemente ist ein einfacher Ein- oder Ausbau möglich.

Im Rahmen der Komfort- und Sicherheitsverbesserung werden in zunehmenden Maß elektrisch oder pneumatisch betriebene Komponenten in den Fahrzeugsitz integriert. Beispiele hierfür sind eine elektrische Sitzverstellung, eine Sitzheizung, eine Sitzbelegungserkennung, Lautsprecher in den Kopfstützen oder in die Sitzlehne eingebaute Airbags.

Um einen mit solchen Komponenten ausgestatteten Fahrzeugsitz zu entnehmen, müssen zunächst die elektrischen oder pneumatischen Verbindungselemente getrennt werden, um die Leitungen nicht zu beschädigen. Dies ist mühsam, da mehrere separate Handgriffe erforderlich sind. Weiter ist eine prozeßsichere Kontaktierung nicht gewährleistet, daß nach dem Einsetzen eines Sitzes die Kontaktierung der Stecker vergessen werden kann.

Aus der EP-A-0 558 408 ist ein gattungsgemäßer Fahrzeugsitz bekannt, der einen elektrisch betätigbaren Verriegelungsmechanismus mit einem Steckerelement aufweist, das über einen Kontaktierungsmechanismus in einer am Fahrzeugboden angeordneten Steckeraufnahme gesichert ist. Für elektrische oder pneumatische Komponenten des Sitzes ist eine prozeßsichere Kontaktierung nicht gewährleistet.

Der vorliegenden Erfindung liegt die Aufgabe zu Grunde, einen entnehmbaren Fahrzeugsitz zur Verfügung zu stellen, der bei einfachem Aufbau eine prozeßsichere Kontaktierung bzw. Dekontaktierung der elektrischen und/oder pneumatischen Komponenten eines Fahrzeugsitzes bei einem Sitzein- bzw. -ausbau gewährleistet. Insbesondere soll die Steckerkontaktierung beim Sitzein- bzw. -ausbau automatisch und unter Ausschluß einer Fehlbedienung durch den Nutzer erfolgen.

Erfindungsgemäß wird diese Aufgabe durch einen entnehmbaren Fahrzeugsitz mit den Merkmalen des Anspruchs 1 gelost. Bevorzugte und vorteilhafte Ausgestaltungen der Erfindung sind in den Unteransprüchen angegeben.

Durch Vorsehen eines Kontaktierungsmechanismus zum Kontaktieren bzw. Dekontaktieren des Steckerelements und Zwangskopplung des Kontaktierungsmechanismus mit dem Verriegelungsmechanismus derart, daß eine Entnahme oder ein Einsetzen des Fahrzeugsitzes in mindestens zwei zeitlich aufeinanderfolgenden Phasen erfolgt, wird eine prozeßsichere Kontaktierung bzw. Dekontaktierung der elektrischen oder pneumatischen Komponenten ermöglicht. Der Nutzer braucht sich um die Kontaktierung dabei nicht zu kümmern, da diese ohne Gefahr einer Fehlbedienung automatisch erfolgt.

Dadurch, daß eine Entnahme oder ein Einsetzen des Fahrzeugsitzes in mindestens zwei zeitlich aufeinanderfolgenden Phasen erfolgt, wobei in der einen Phase ausschließlich eine Kontaktierung/Dekontaktierung des Steckerelements und in der anderen Phase ausschließlich eine Verriegelung/Entriegelung des Fahrzeugsitzes stattfindet, wird sichergestellt, daß die elektrischen oder pneumatischen Verbindungen zwischen dem Fahrzeugsitz und einer anderen Fahrzeugkomponente bei der Sitzentnahme oder beim Einsetzen des Sitzes nicht beschädigt werden. Vor einer Entriegelung und Entnahme des Sitzes erfolgt zwingend zunächst eine Dekontaktierung des Steckerelements, über das der Sitz und andere Fahrzeugkomponenten elektrisch und/oder pneumatisch verbunden sind. Umgekehrt kann beim Einsetzen des Sitzes eine Kontaktierung erst dann erfolgen, nachdem der Sitz sicher verriegelt ist.

Der Ein- bzw. Ausbau eines Sitzes erfolgt dabei auf einfache Weise, da lediglich das Betätigungselement verschwenkt oder bewegt werden muß, damit der Sitz ausbaubereit ist. Zusätzlich verringert die erfindungsgemäße Lösung die Kosten bei der Herstellung und Reparatur von Automobilen, da die Montage vereinfacht, die Montagezeit verkürzt wird und die prozeßsichere Handhabung Kosten durch eine Beschädigung nicht korrekt positionierter Steckerelemente minimiert.
In einer bevorzugten Ausgestaltung der Erfindung werden die mindestens zwei zeitlich aufeinanderfolgenden Phasen der Entnahme oder des Einsetzens des Fahrzeugsitzes über entsprechende Betätigungsphasen des Betätigungselements gesteuert und ausgelöst. Dadurch ist zum Ausbau/Einbau des Sitzes die Bedienung lediglich eines Bedienungselementes erforderlich. Die mindestens zwei zeitlich aufeinanderfolgenden Phasen werden bevorzugt durch eine mindestens zweiphasige Schwenkbewegung des Betätigungselementes, entweder um die gleiche Schwenkachse oder um unterschiedliche Schwenkachsen, alternativ durch eine Schwenkbewegung und eine lineare Bewegung, alternativ durch zwei lineare Bewegungen des Betätigungselementes ausgelöst. Durch die Schwenk- und/ oder lineare Bewegungen des Betätigungselementes werden dabei Schwenk- und/oder lineare Bewegungen im Kontaktierungsmechanismus bzw. Verriegelungsmechanismus ausgelöst, die zu einer Kontaktierung/Dekontaktierung bzw. Verriegelung/Entriegelung führen.

In einer Weiterbildung der Erfindung werden insgesamt vier zeitlich aufeinanderfolgenden Phasen bei der Entnahme des Fahrzeugsitzes durchlaufen, wobei
a) in der ersten Phase ein vorhandenes Kontaktierungsspiel des Steckerelements in der Schnittstelle durchschritten wird,
b) in der zweiten Phase eine Dekontaktierung des Steckerelements erfolgt,
c) in der dritten Phase ein Sicherheitsspiel der Entriegelung durchschritten wird und
d) in der vierten Phase eine Entriegelung des Fahrzeugsitzes vom Fahrzeugboden erfolgt.

In einer vorteilhaften Ausgestaltung der Erfindung weist der Verriegelungsmechanismus an jeder Sitzschiene mindestens ein Verriegelungsteil auf, das jeweils mit einem Befestigungsteil des Fahrzeugbodens in Eingriff bringbar ist. Mindestens zwei Verriegelungsteile der beiden Sitzschienen sind dabei über ein Koppelelement miteinander verbunden, so daß nur ein Betätigungselement zum Verriegeln aller Verriegelungsstellen erforderlich ist. Der Kontaktierungsmechanismus weist Mittel zum Anbringen bzw. Lösen des Steckerelements an der Schnittstelle auf. Die Verriegelungsteile und die Mittel zum Einführen bzw. Lösen des Steckerelements sind zum Auslösen der jeweiligen Funktionen beide mit dem Betätigungselement gekoppelt, wobei Blockiermittel derart vorgesehen sind, daß je nach Bewegungsphase des Betätigungselements ausschließlich eine Verriegelung/Entriegelung oder eine Kontaktierung/Dekontaktierung erfolgen kann.

In einer Weiterbildung dieser Ausführungsform ist das Koppelelement sowohl drehbar als auch translatorisch verschiebbar und über einen Mitnehmer mit dem Steckerelement fest verbunden ist, wobei das Koppelelement in einer ersten Bewegungsphase des Betätigungselements translatorisch verschoben wird und über den Mitnehmer eine Dekontaktierung/Kontaktierung des Steckerelements erfolgt, und das Koppelelement in einer zweiten Bewegungsphase des Betätigungselements gedreht und dabei die Verriegelungsteile verschwenkt und der Sitz entriegelt/verriegelt wird. Das Koppelelement bewirkt bei dieser Ausführungsform in Zusammenwirken mit dem Betätigungselement sowohl eine Dekontaktierung als auch eine Entriegelung.

Das Koppelelement ist bevorzugt in Form eines Gestänges ausgebildet, da auf diese Art eine einfache und zuverlässige Übertragung sowohl von Drehmomenten als auch von Schubkräften möglich ist.

Um sicherzustellen, daß je nach Bewegungsphase des Betätigungselements ausschließlich eine Verriegelung/Entriegelung oder eine Kontaktierung/Dekontaktierung erfolgt, wird in einer bevorzugten Variante während der Dekontaktierungsphase eine Drehung des Koppelelements und damit eine Entriegelung des Sitzes durch ein feststehendes Blockierelement verhindert, an dem der Mitnehmer solange anliegt, bis die Dekontaktierung abgeschlossen ist. Als Blockierelement kann dabei beispielsweise ein ohnehin vorhandener Befestigungsbolzen der Fahrzeugbodens dienen.

Alternativ oder ergänzend ist während einer Verriegelung/Entriegelung oder einer Kontaktierung/Dekontaktierung der jeweils andere Vorgang dadurch blockiert, daß der der jeweils anderen Phase zugeordnete Bewegungsfreiheitsgrad des Betätigungselements durch im Bereich des Betätigungselementes angeordnete Blockierelemente wie Vorsprünge etc. blockiert ist.

In einer bevorzugten Ausbildung der Erfindung sind in der Wirkverbindung zwischen dem Betätigungselement und dem Steckerelement Federmittel vorgesehen, die eine Vorspannung auf das Steckerelement zu dessen Kontaktierung in der Schnittstelle erzeugen. Das Steckerelement wird damit stets in Kontaktstellung gehalten. Dadurch wird zum einen verhindert, daß etwa durch Vibration die Steckverbindung getrennt wird, und zum anderen eine sichere Kontaktierung beim Einsetzen des Sitzes sichergestellt.

In einer vorteilhaften Ausgestaltung der Erfindung wird die Wirkverbindung zwischen dem Betätigungselement und dem Steckerelement in einfacher Weise über ein mit dem Betätigungselement verbundenes Zugmittel, etwa ein Zugseil oder eine Kette, hergestellt. Als Variante ist zur Übermittlung der Kräfte ein Gestänge vorgesehen.

In einer Weiterbildung der Erfindung wird der Betätigungshebel derart in einer Kulisse geführt, daß die Betätigung des Betätigungshebels in der ersten Bewegungsphase ab einem bestimmten Punkt nicht mehr zu einer weiteren Dekontaktierung des Steckerelements, sondern lediglich zu einer Verschiebung des Betätigungshebels in der Kulisse führt. Die restliche Schwenkbewegung des Betätigungshebels dient dann der Einleitung der Entriegelung des Sitzes am Fahrzeugboden. Bei der Montage des Sitzes klappt der Betätigungshebel nach Verriegeln des Sitzes durch die Zugkraft der Federmittel in der Kulisse zurück, was mit einer Kontaktierung des Steckerelements einhergeht.

In einer bevorzugten Variante der Erfindung erfolgt eine Wirkverbindung zwischen Betätigungselement und Steckerelement nicht über das die Verriegelungsteile der Sitzschienen koppelnde Koppelelement, sondern direkt über einen mit dem Betätigungselement verbundenen Bowdenzug. Hierdurch wird Bewegungsraum für die lineare Bewegung des Koppelelements eingespart sowie eine aufwendige Lagerungstechnik für die Linearbewegung vermieden. Das Kabel des Bowdenzugs ist dabei bevorzugt am Steckerelement direkt eingehängt. Das steckerseitige Bowdenrohrende stützt sich an der Sitzschiene oder einem anderen sitzfesten Teil ab. Eine Vorspannung wird bevorzugt durch eine Druckfeder bewirkt, die sich an einem Bund am Bowdenrohrende sowie dem Steckerelement abstützt und bestrebt ist, das Steckerelement in die zugehörige Buchse zu drücken.

Weitere Ausgestaltungen und Weiterbildungen der Erfindung werden anhand der nachfolgenden Beschreibung mehrerer Ausführungsbeispiele der Erfindung deutlich werden. Es zeigen:
- Fig. 1 -: eine Darstellung eines Sitzunterschienenpaares mit einer ersten Ausführungsform eines erfindungsgemäßen Verriegelungs- und Kontaktierungsmechanismus;
- Fig. 2 -: eine Darstellung der Fig. 1 in anderer Ansicht;
- Fig. 3 -: eine Draufsicht auf das Sitzunterschienenpaares der Fig. 1,
- Fig. 4a bis 4c-: einen Entriegelungsvorgang in abschnittsweiser Darstellung,
- Fig. 5 -: eine Darstellung eines Sitzunterschienenpaares mit einer zweiten Ausführungsform eines erfindungsgemäßen Verriegelungs- und Kontaktierungsmechanismus,
- Fig. 5a -: eine Detailansicht des Steckerbereichs der Fig. 5;
- Fig. 5b -: eine Detailansicht des Betätigungselements der Fig. 5
- Fig. 6 - 6b: mehrere Darstellungen des Betätigungselements der Ausführungsform der Fig. 5 in Draufsicht in verschiedenen Positionen und
- Fig. 7 - 7b: mehrere Fig. 6 - 6b entsprechende dreidimesionale Darstellungen des Betätigungselements der Ausführungsform der Fig. 5.

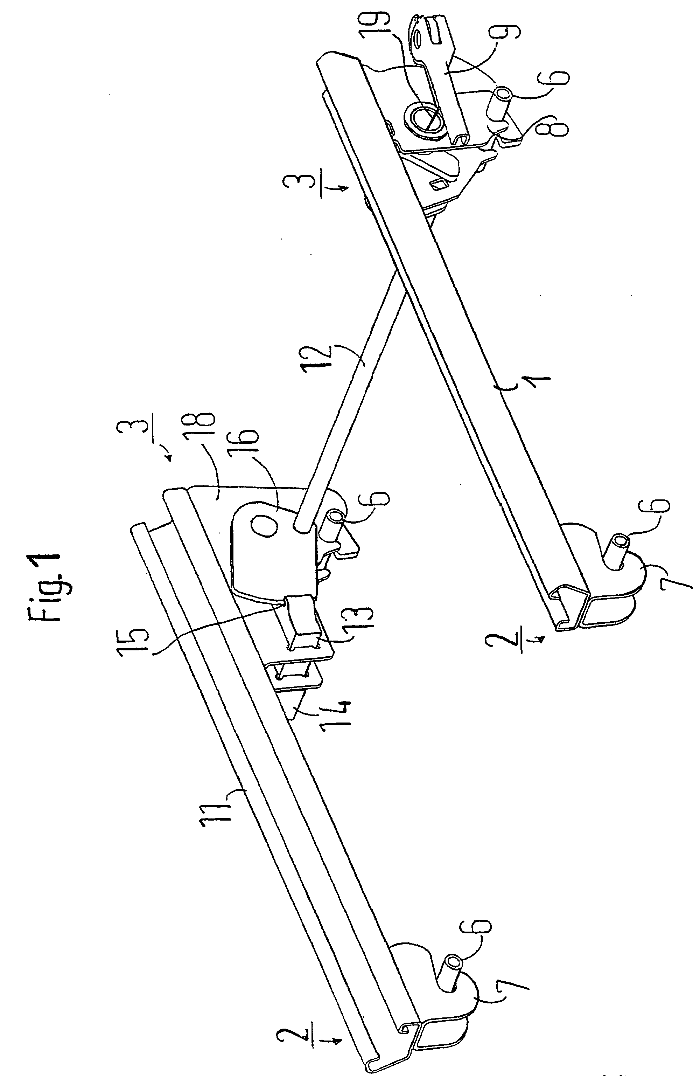

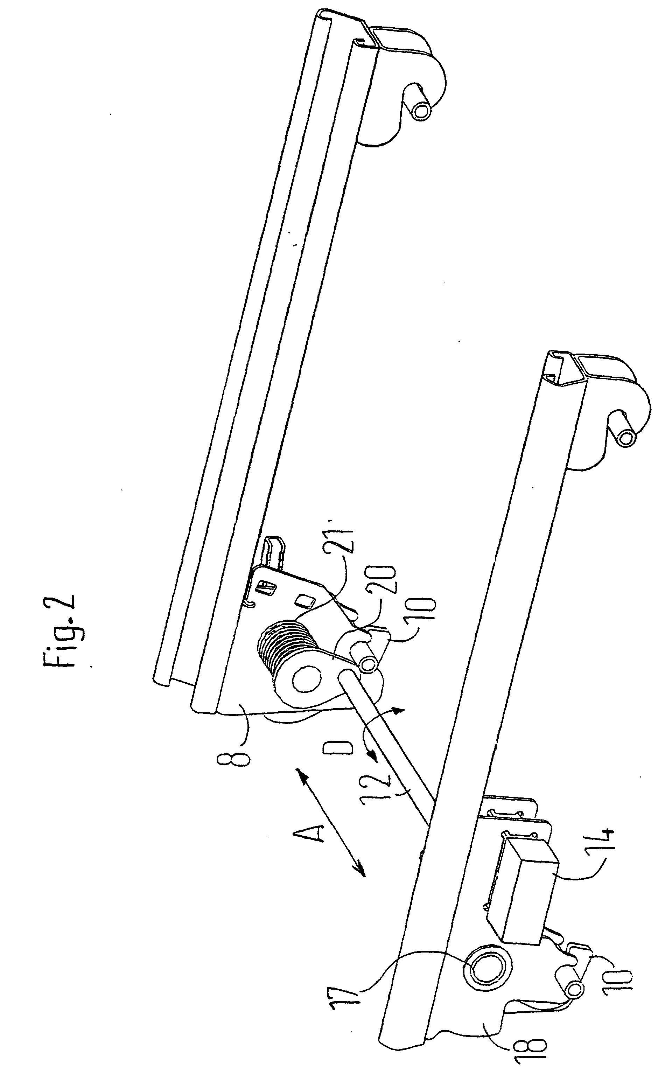

Figur 1 und Figur 2 zeigen zwei Sitzunterschienen 1 und 11 eines nicht dargestellten Fahrzeugsitzes mit vorderen und hinteren Befestigungsbereichen 2 und 3 zur Verbindung der Unterschienen oder der Sitzbasis mit dem nicht dargestellten Fahrzeugboden aus unterschiedlichen Perspektiven. Die Befestigungsbereiche 2, 3 weisen Lagerungselemente auf, die aus im Bodenblech verankerten, als Bolzen ausgebildete Halteteilen 6 bestehen. An den Sitzunterschienen 1 und 11 sind in dem ersten Befestigungsbereich 2 Verbindungselemente 7 in Hakenform montiert, die in die Halteteile 6 eingehängt werden und so die Beweglichkeit der Sitzunterschienen 1 und 11 einschränken und eine teilweise Festlegung bewirken.

In dem zweiten Befestigungsbereich 3 stützten sich die Unterschienen 1 und 11 über Verbindungselemente 8 und 18 auf den Halteteilen 6 ab. Das Verbindungselement 8 weist eine Ausnehmung auf, die dergestalt geformt sind, daß der Fahrzeugsitz bzw. die Sitzunterschienen 1 und 11 auch bei nicht exakter Positionierung beim Einbau die vorgesehene Endlage einnimmt. An der ersten Sitzschiene 1 ist ein Betätigungselement 9 angebracht, über das ein Verriegelungsteil 10 zum Verriegeln formschlüssig um das Halteteil 6 verschenkt werden kann. An der zweiten Sitzunterschiene 11 ist ein entsprechendes Verriegelungsteil 10 angebracht, das über ein Gestänge 12 mit dem Betätigungselement 9 wirkverbunden ist, so daß die Verriegelung beidseitig erfolgt. Die Verriegelungsteile 10 sind, beispielsweise durch Schweißung, fest mit dem Gestänge 12 verbunden. In der dargestellten Verriegelungsstellung sind die Sitzunterschienen 1 und 11 fest mit dem Fahrzeugboden verbunden.

An der dem Betätigungselement 9 gegenüberliegenden Sitzschiene 11 ist in dem Verbindungselement 18 eine Ausnehmung vorgesehen, in der ein Stecker 13 lösbar lagert. Über den Stecker 13 sind Versorgungs- und Steuerungsleitungen elektrischer, elektronischer und/oder pneumatischer Einrichtungen des Fahrzeugsitzes lösbar mit dem Sitz verbunden. Eine Steckeraufnahme 14 ist karrosseriefest montiert und bildet das Gegenstück zu dem Stecker 13. Die Befestigung der Steckeraufnahme 14 ist abhängig von den konstruktiven Gegebenheiten im Fahrzeuginnenraum und kann sowohl am Mitteltunnel als auch am Türschweller erfolgen. Abweichend von der dargestellten Ausführungsform ist auch eine Anbringung am Fahrzeugboden möglich.

An dem Stecker 13 ist eine rillenartige Führung 15 eingearbeitet, in die eine mit dem Gestänge 12 starr verbundene Scheibe 16 eingreift, die drehbeweglich und längsverschieblich in dem Verbindungselement 18 gelagert ist. In Figur 2 ist zu erkennen, daß die Scheibendrehachse in einer Buchse 17 gelagert ist und sowohl eine Bewegung des Gestänges 12 in Richtung des Doppelpfeiles A, quer zur Erstrekkungsrichtung der Sitzschienen 1 und 11, als auch eine Drehung in Richtung des Pfeiles D ermöglicht.

Die Querbewegung wird durch ein Verschwenken des Betätigungselementes 9 erreicht, an dem ein Seil 19 angebracht ist, das an einer Scheibe 20 befestigt ist, die an dem Verbindungselement 8 drehbar und längsverschiebbar gelagert ist. Durch das Verschwenken des Betätigungselementes 9 wird die Scheibe 20 in Richtung des Verbindungselementes 8 gezogen. Da zwischen den Scheiben 16 und 20 durch das Gestänge 12 eine starre Verbindung besteht, wird der über die Führung 15 formschlüssig mit der Scheibe 16 verbundene Stecker 13 ebenfalls in Richtung des Verbindungselementes 8 bewegt und von der ortsfesten Steckeraufnahme 14 getrennt. Die Länge des Verschiebeweges richtet sich dabei an der zur Trennung von Stecker 13 und Steckeraufnahme 14 zu überbrückenden Entfernung.

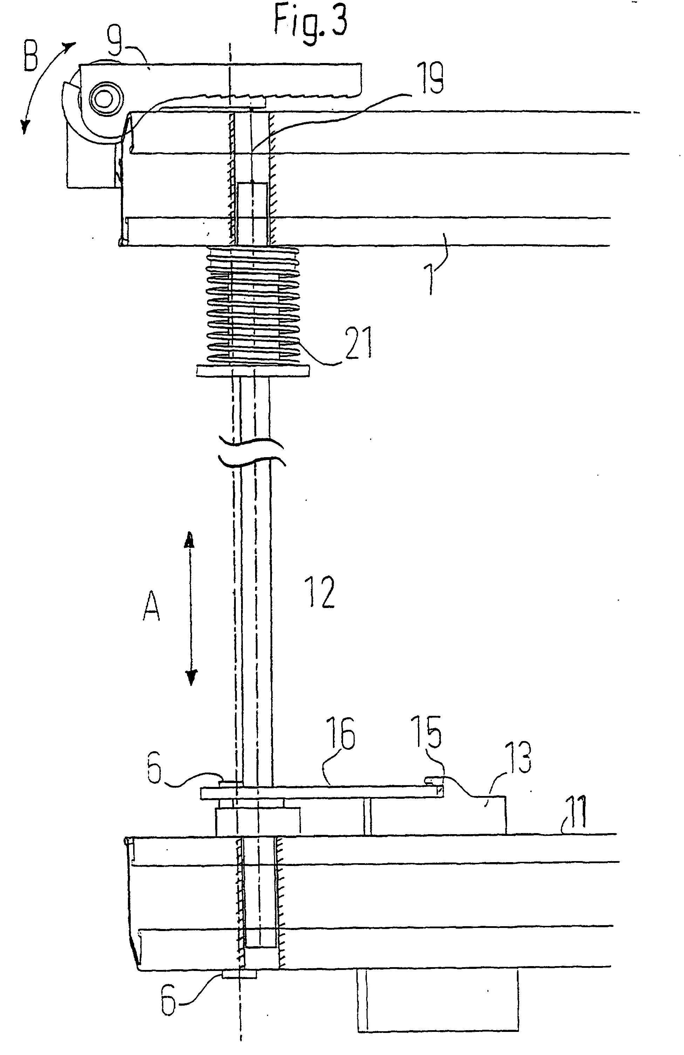

Figur 3 zeigt eine teilweise geschnittene Draufsicht auf die Anordnung der Fig. 1. Zwischen dem Verbindungselement 8 und der Scheibe 20 ist eine Spiralfeder 21 angeordnet, die das Gestänge 12 in Verriegelungsstellung in Richtung des Steckers 13 drückt, so daß ein sicherer Kontakt gewährleistet ist und sich der Stecker 13 und die Steckeraufnahme 14 nicht unbeabsichtigt voneinander trennen.

Nach Verschwenken des Betätigungselementes 9 ist die Steckverbindung vollständig getrennt und das Betätigungselement 9 befindet sich in einer Position, die ein leichtes Verschwenken um die Achse durch die Lagerungsstellen des Gestänges 12 ermöglicht. Zum Entriegeln des Fahrzeugsitzes wird eine Drehbewegung um die Drehachse des Gestänges ausgeführt und die Verriegelungsteile 10 verschwenken um die Achse nach hinten. Um eine Entriegelung zu verhindern, solange die Steckverbindung besteht, liegt die Scheibe 16 in der Verriegelungsstellung an dem Halteteil 6 an. Erst nachdem das Gestänge 12 verschoben worden ist und die Steckverbindung vollständig gelöst wurde, kann die Scheibe 16 an dem Halteteil 6 vorbeischwenken. Die Verriegelungsteile 10 bewegen sich dadurch in eine Entriegelungsstellung und der Fahrzeugsitz kann entnommen werden.

Ein Einbau des Fahrzeugsitzes kann nur in umgekehrter Reihenfolge erfolgen, also zunächst ein Einsetzen der Verbindungselemente 8 und 18 auf die Halteteile 6, darauffolgend ein Verschwenken der Verriegelungsteile 10 sowie abschließend ein Kontaktieren von Stecker 13 und Steckeraufnahme 14. Ein Einsetzen der Verbindungselemente 8 und 18 bei einem in Kontaktierungsstellung befindlichen Stecker 13 wird durch die Scheibe 16 verhindert, die zuvor mit dem Halteteil 6 kollidieren würde. Ferner können die Steckerelemente erst verbunden werden, wenn der Sitz verriegelt ist, so daß zum einem die Steckverbindung nicht beschädigt werden, zum anderen eine Verstellung nur bei einem fest verankerten Sitz erfolgen kann. Auf diese Art und Weise liegt eine mechanische Zwangskoppelung zwischen dem Ent- bzw. Verriegelungsvorgang und dem Dekontaktierungs- bzw. Kontaktierungsvorgang vor.

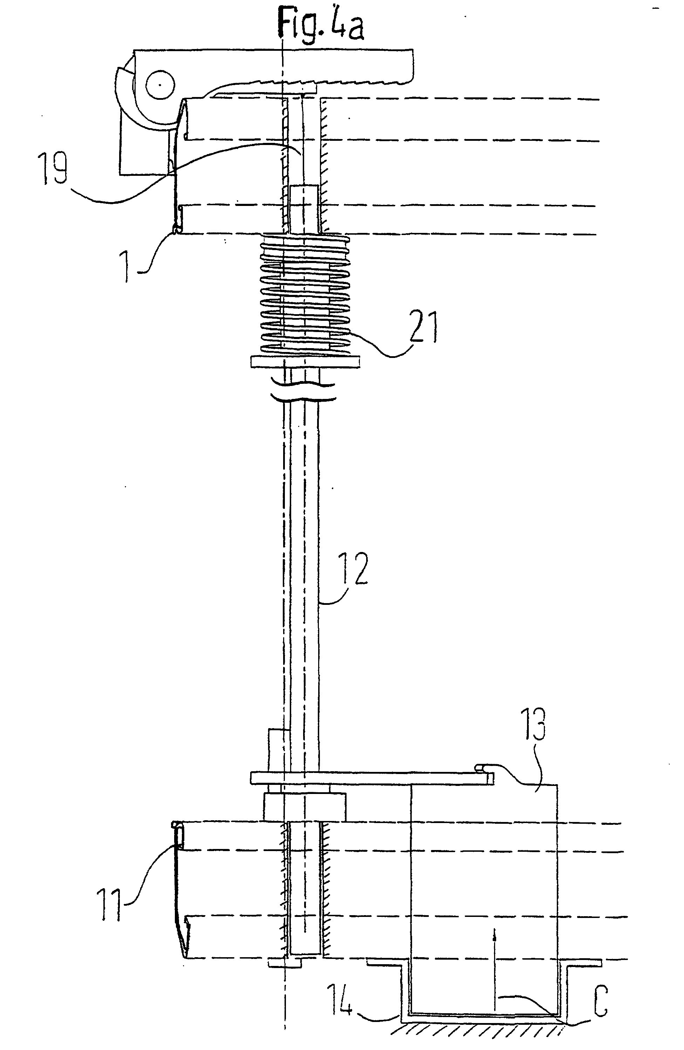

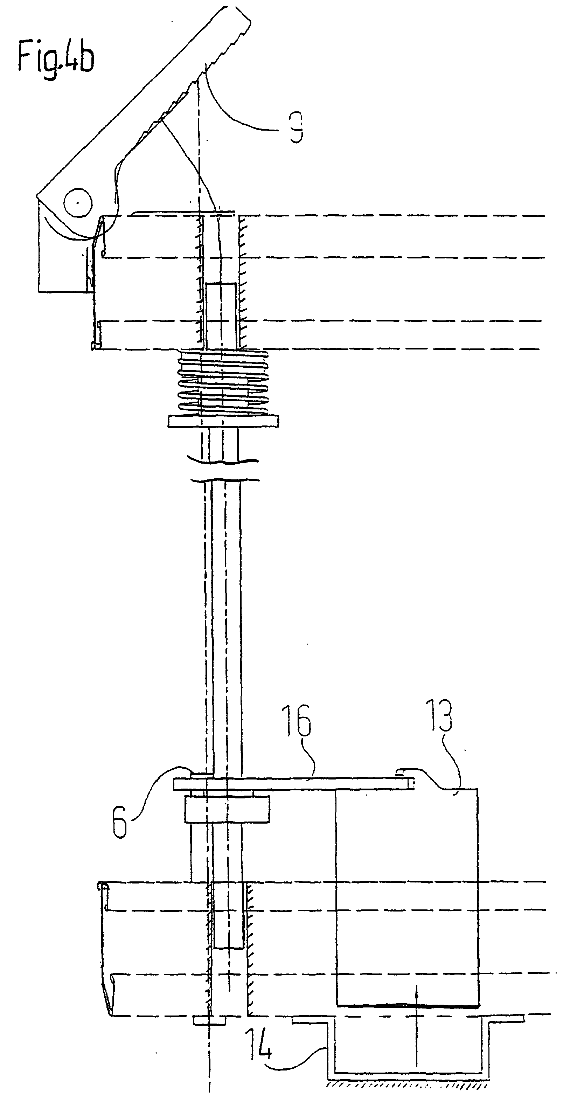

Die Figuren 4a bis 4c zeigen die unterschiedlichen Phasen eines Dekontaktierungsvorganges.

In Fig. 4a befindet sich der Stecker 13 vollständig in der Steckeraufnahme 14 und ist über das Gestänge 12 und die Scheibe 16 mit einer Federkraft belastet, die entgegen der Öffnungsrichtung, dargestellt durch den Pfeil C, wirkt und durch die Spiralfeder 21 erzeugt wird. Das Gestänge 12 ist über das Zugseil 19 mit dem Betätigungselement 9 verbunden. Das Gestänge 12 ist dreh- und verschiebbar in den Sitzunterschienen 1 gelagert.

In der Fig. 4b ist das Betätigungselement 9 verschwenkt und über das Seil 19 wird die Verlagerung des Seilbefestigungspunktes auf das Gestänge 12 übertragen. Über die Scheibe 16 und die Führung 15 wird die Bewegung auf den Stecker 13 weitergeleitet, der aus der Steckeraufnahme 14 herausgezogen ist. In dieser "Übergangsphase", in der der Stecker 13 gerade aus der Steckeraufnahme 14 herausgezogen worden ist, stößt die Scheibe 16 bei einer versuchten Drehbewegung gegen das Halteteil 6 und blockiert so den Entriegelungsvorgang.

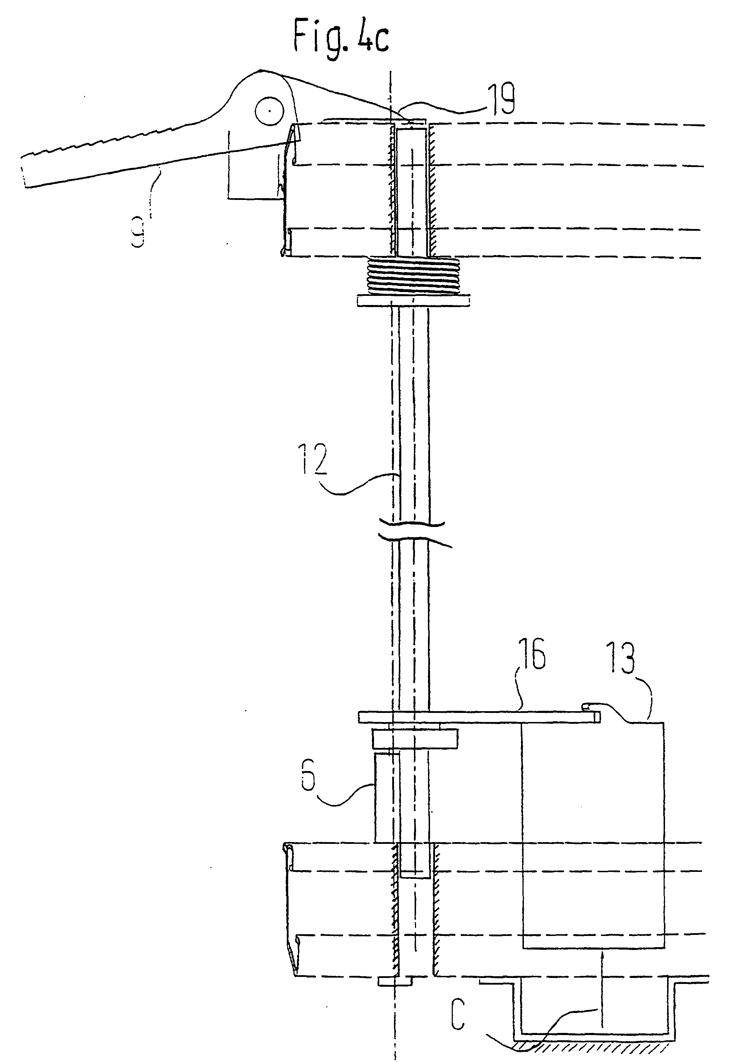

Erst wenn eine weitergehende Bewegung in Richtung Pfeil C erfolgt und der Stecker 13 eine Dekontaktierungsposition mit einer zusätzlichen Sicherheit erreicht hat, wie in der Figur 4c dargestellt, kann die Scheibe 16 durch ein Verschenken des Betätigungselementes 9 um die Drehachse des Gestänges 12 an dem Halteteil vorbeibewegt werden. Durch die Drehung werden die nicht erkennbaren Verriegelungsteile 10 verschwenkt, die Verriegelung wird gelöst und der Sitz kann entnommen werden. Die zweite Schwenkbewegung des Betätigungselementes 9 zur Entriegelung erfolgt dabei in einer Ebene, die im wesentlichen senkrecht zu der Ebene liegt, in der das Betätigungselement zur Dekontaktierung verschwenkt wurde. Durch die senkrechten Bewegungsebenen wird sichergestellt, daß die beiden Bewegungsphasen des Betätigungselements 9 streng hintereinander erfolgen.

Vorteilhafterweise befindet sich das Betätigungselement 9 nach der Dekontaktierung und Entriegelung in einer Totlage, so daß aufgrund der Federkraft kein selbständiges Zurückschwenken erfolgen kann. Erreicht wird dies beispielsweise durch eine bewegliche Seilaufnahme, wodurch in der Entriegelungsstellung das Seilende zwischen die Drehachse des Betätigungselementes 9 und der Sitzschiene 1, 11 geführt wird.

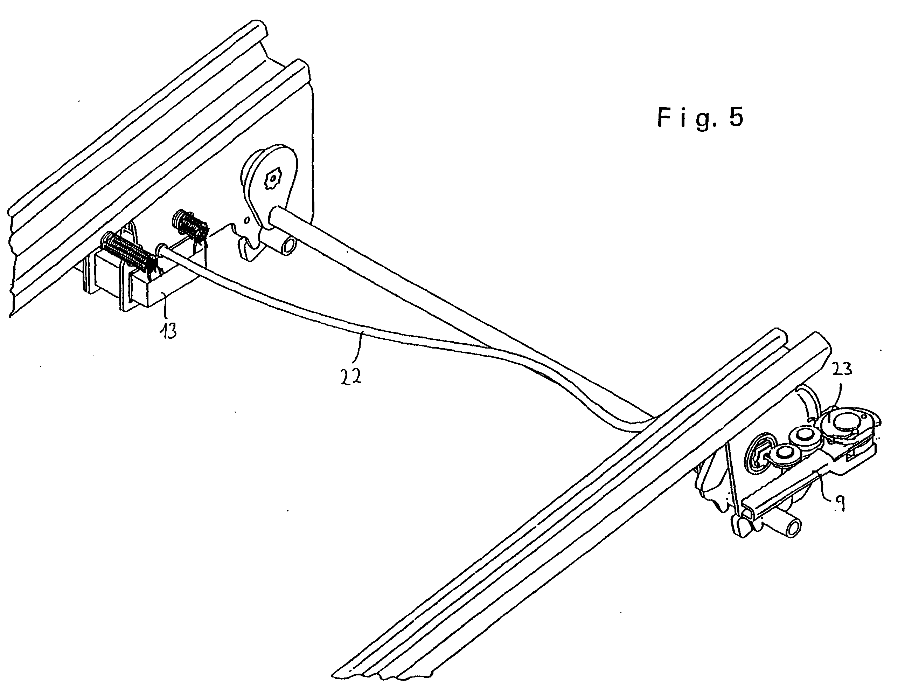

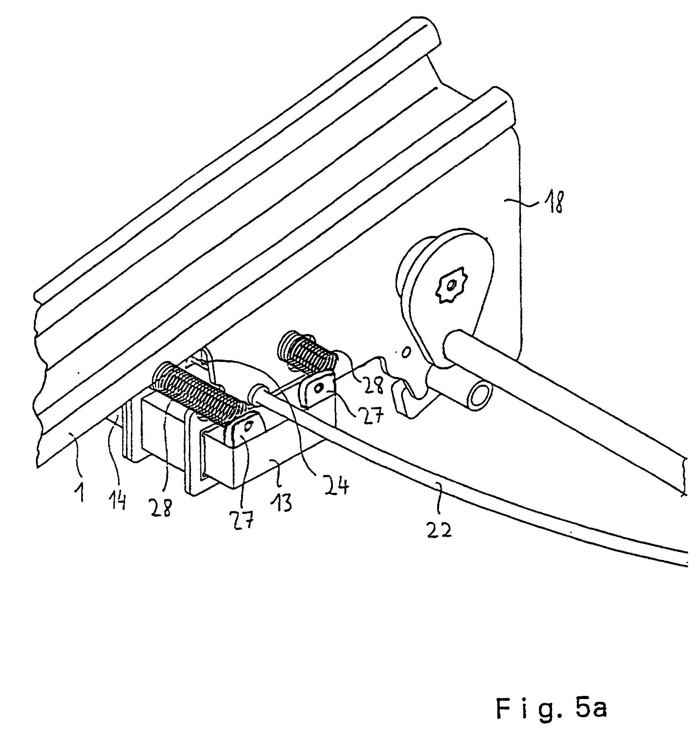

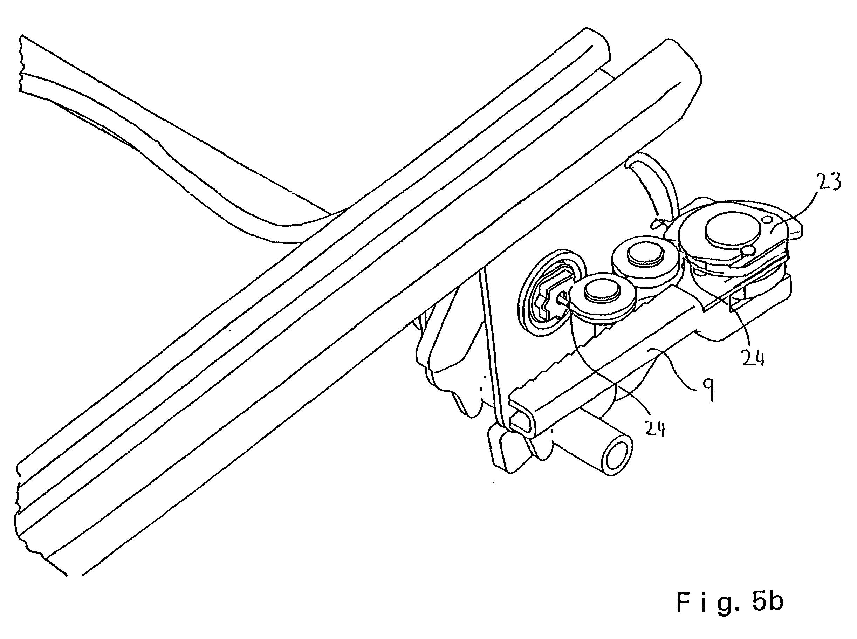

Fig. 5 zeigt eine alternative Ausführungsform der Erfindung, bei der die Wirkverbindung zwischen dem Betätigungselement 9 und dem Steckerelement 13 über ein Bowdenrohr 22 hergestellt wird. In dem Bowdenrohr 22 verläuft in an sich bekannter Weise ein Seil, das an seinem steckerseitigen Ende über einen Nippel am Steckerelement 13 eingehängt ist. Wie insbesondere der Detailansicht der Fig. 5a zu entnehmen ist, erzeugen an der Sitzschiene 1 bzw. dem Verbindungselement 18 sich abstützende und über Befestigungsstellen 27 mit dem Steckerelement 13 verbundene Zugfedern 28 eine Vorspannung, die bestrebt ist, das Steckerelement 13 in die zugehörige Buchse 14 zu drücken.

Das in dem Bowdenrohr 22 verlaufende Seil 24 ist dabei im vorderen Bereich des Steckerelements 13 an diesem eingehängt (nicht dargestellt). Das Bowdenrohrende stützt an dem Verbindungselement 18 bzw. alternativ an einem anderen sitzfesten Teil ab. Bei einer Dekontaktierung werden die Zugfedern 28 gespannt.

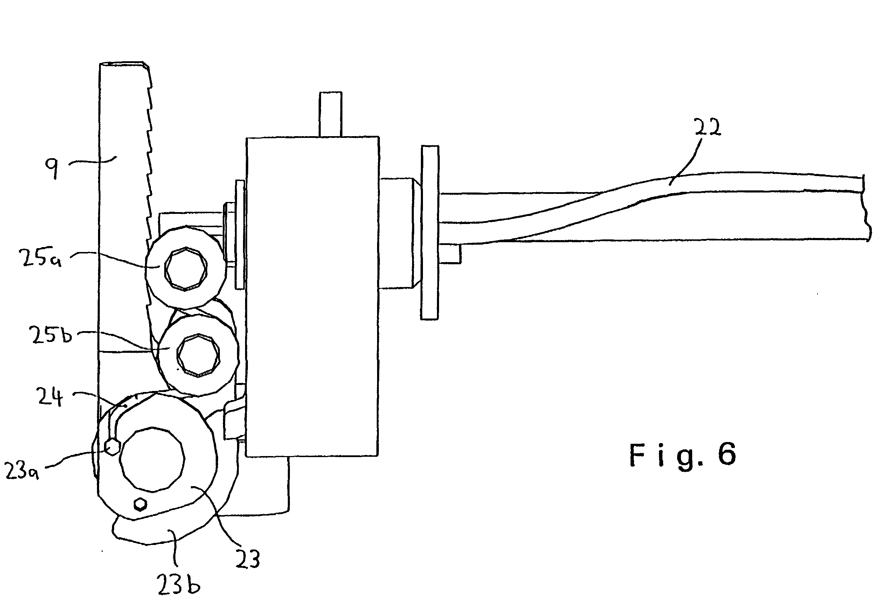

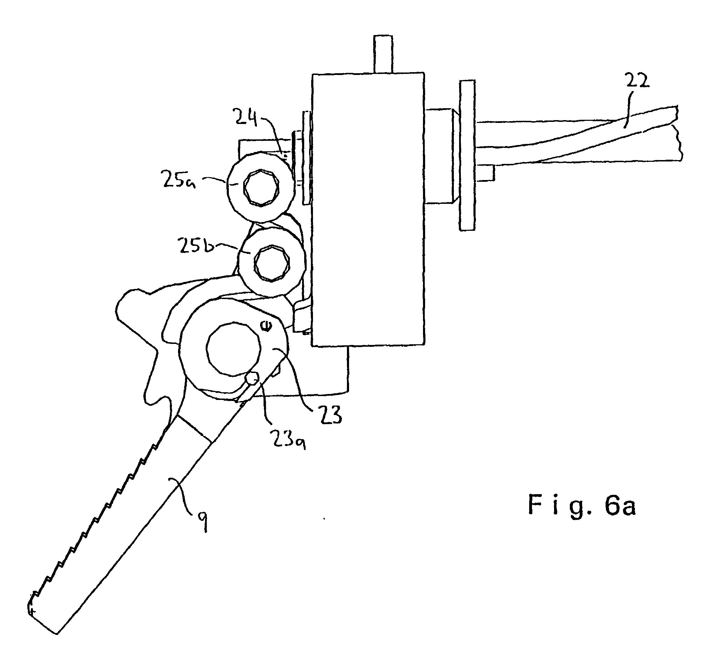

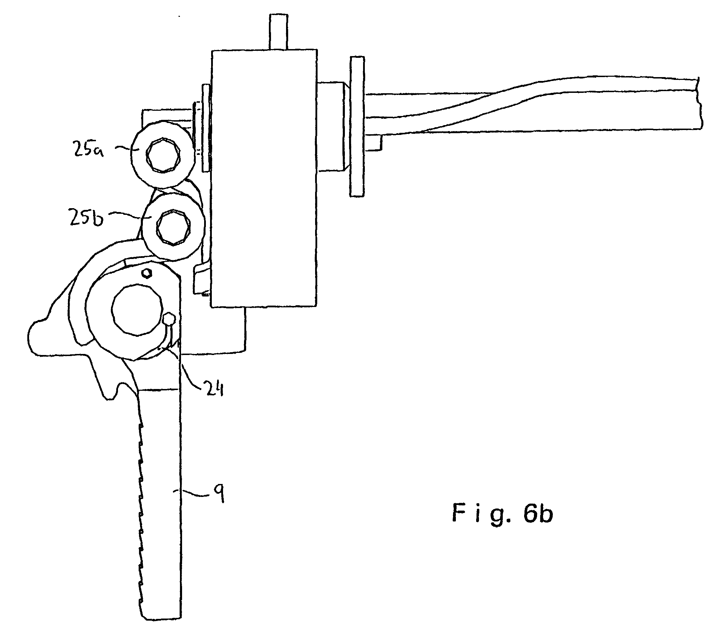

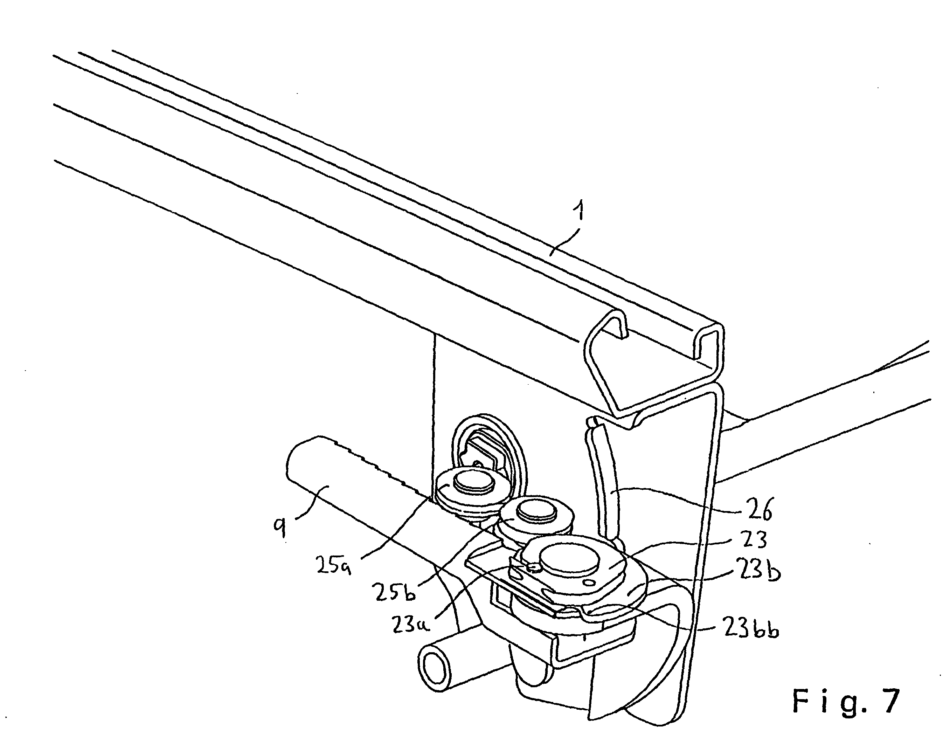

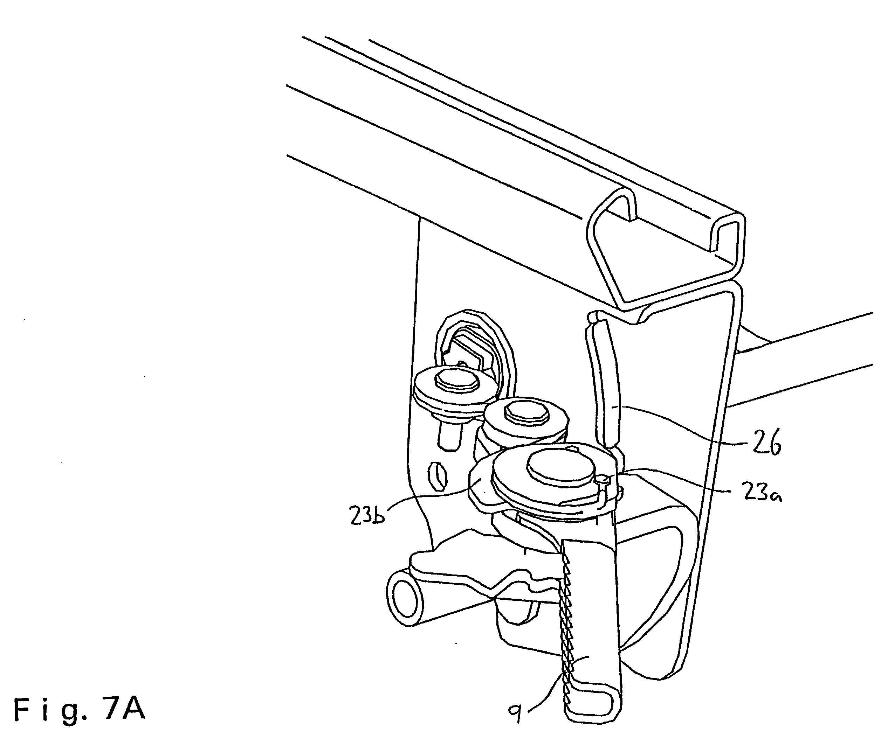

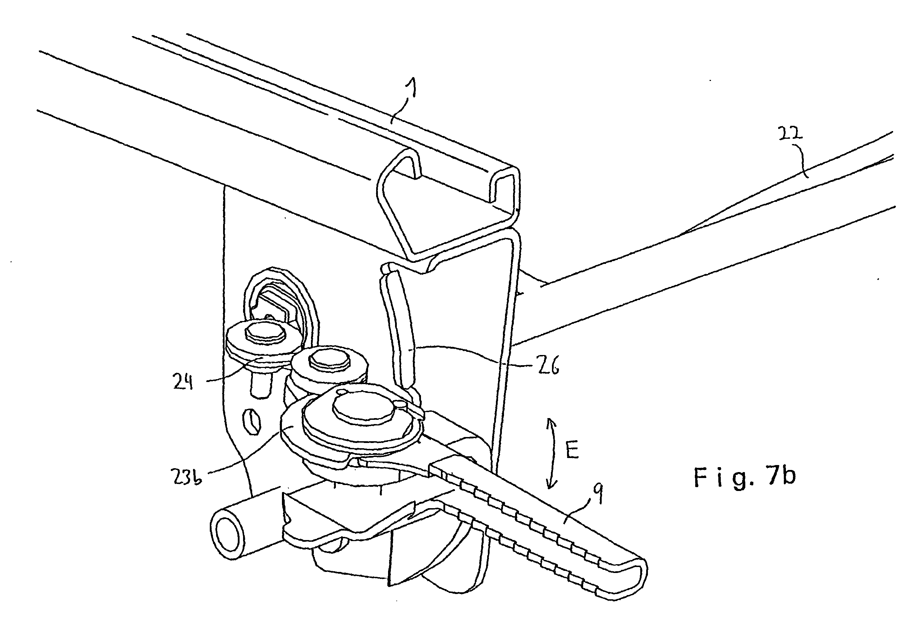

Gemäß Fig. 5b ist das andere Ende des Seils 24 des Bowdenrohrs 22 ist an einer Seilrolle 23 eingehängt, die am Betätigungselement 9 angeordnet ist. Die Anordnung des Betätigungselements 9, der Seilrolle 23 und zugehöriger Komponenten ist in den Fig. 6 bis 6b in Draufsicht und in den Fig. 7 bis 7b dreidimensional dargestellt, wobei in den jeweiligen Figuren die gleichen Bewegungsphasen dargestellt sind. Es wird bereits an dieser Stelle darauf hingewiesen, daß die in diesen Figuren beschriebene Anbringung des Seils am Betätigungselement 9 auch bei der in Bezug auf die Figuren 4 bis 4c beschriebenen Ausführungsform der Erfindung Einsatz finden kann.

Gemäß Fig. 6 - 6b und Fig. 7 - 7b ist das Seil 24 des Bowdenrohrs 22 in eine Nippelkammer 23a der Seilrolle 23 eingehängt. Das Seil 24 wird dabei über zwei feststehende Umlenkrollen 25a, 25b geführt, um eine hohe Übersetzung zur Verfügung zu stellen. Die Seilrolle 23 weist eine vorstehende Nase 23b auf, die insbesondere in Fig. 7 gut zu erkennen ist.

Fig. 6 zeigt die Grundstellung des Betätigungshebels 9, in der einer Verriegelung und Kontaktierung des Steckerelements vorliegt. Nach einem Öffnen des Betätigungshebels 9 zur Dekontaktierung des Steckerelements 13 in einer ersten Bewegungsphase, in der sich der Betätigungshebel 9 in der Zeichenebene bewegt, erfolgt eine Schwenkbewegung des Betätigungshebels 9 in einer Ebene senkrecht zur Zeichenebene in einer sich anschließenden zweiten Bewegungsphase zur Entriegelung des Sitzes. Die zweite Bewegungsphase kann dabei eingeleitet werden, sobald der Betätigungshebels 9 um etwa 140° ausgeklappt ist (Fig. 6a). Fig. 6b zeigt den vollständig ausgeklappten Betätigungshebel 9.

Wie in Fig. 7 - 7b zu erkennen, gelangt bei einer Verschwenkung des Betätigungselements 9 in der zweiten Bewegungsphase, d.h. in Richtung des Pfeils E (vgl. Fig. 6b), das Ende 23bb der Nase 23b zur Anlage hinter ein Führungsteil 26, so daß der Betätigungshebel 9 gegen ein Zurückschnappen gesichert und damit eine unerwünschte Kontaktierung des Steckerelements 13 sicher verhindert wird.

Die Nase 23b bewirkt des weiteren, daß der Betätigungshebel 9 erst dann senkrecht zur Zeichenebene (Fig. 6b) bzw. in Richtung des Pfeils E (Fig. 6b) verkippt werden kann, wenn die erste Bewegungsphase (Dekontaktierung) vollständig abgeschlossen ist, da zuvor die Nase 23b gegen den unteren Rand des Führungsteils 26 stößt und eine Bewegung blokkiert.

Nach Verschwenken des Betätigungselements 9 senkrecht zur Zeichenebene (Fig. 6b) bzw. in Richtung des Pfeils E (Fig. 7b) ist der Sitz entriegelt und kann entnommen werden. Die Entriegelung des Sitzes erfolgt dabei wie in Bezug auf Fig. 1 bis 4c beschrieben. Leicht nachteilig ist dabei, daß im entnommenen Zustand der Betätigungshebel 9 schräg nach oben absteht, was zu Beschädigungen führen kann.

In einer Weiterbildung der Erfindung (nicht dargestellt) ist daher die Seilrolle 23 am Betätigungshebel 9 in einer Kulisse geführt, die es ermöglicht, den Betätigungshebel 9 nach Entriegelung des Sitzes zurückzuklappen, wobei die Nase 23b weiterhin hinter dem Führungsteil 26 anliegt. Ein Verschwenken des Betätigungshebels 9 führt daher nicht zu einer Betätigung des Bowdenseils 24. Nach Einsetzen des Sitzes klappt die Seilrolle 23 durch die Federvorspannung dann automatisch in die Ausgangslage zurück, verbunden mit einer Verriegelung und Kontaktierung.

Die Erfindung beschränkt sich in ihrer Ausführung nicht auf die vorstehend beschriebenen Ausführungsbeispiele. Wesentlich für die Erfindung ist allein, daß der Kontaktierungsmechanismus und der Verriegelungsmechanismus derart zwangsgekoppelt sind, daß eine Entnahme oder ein Einsetzen des Fahrzeugsitzes in mindestens zwei zeitlich aufeinanderfolgenden Phasen erfolgt, wobei in der einen Phase ausschließlich eine Kontaktierung/Dekontaktierung des Steckerelements und in der anderen Phase ausschließlich eine Verriegelung/Entriegelung des Fahrzeugsitzes stattfindet.

### Bezugszeichenliste

- 1 -: Sitzunterschiene
- 2 -: Befestigungsbereich
- 3 -: Befestigungsbereich
- 6 -: Halteteil
- 7 -: Verbindungselement
- 8 -: Verbindungselement
- 9 -: Betätigungselement
- 10 -: Verriegelungsteil
- 11 -: Sitzunterschiene
- 12 -: Gestänge
- 13 -: Stecker
- 14 -: Steckeraufnahme
- 15 -: Führung
- 16 -: Scheibe
- 17 -: Buchse
- 18 -: Verbindungselement
- 19 -: Seil
- 20 -: Scheibe
- 21 -: Spiralfeder
- 22 -: Bowdenrohr
- 23 -: Seilrolle
- 23a -: Nippelkammer
- 23b -: Nase
- 23bb -: Ende der Nase
- 24 -: Seil
- 25a -: Umlenkrolle
- 25b -: Umlenkrolle
- 26 -: Führungsteil
- 27 -: Befestigungsstelle
- 28 -: Zugfeder

- A -: Verschieberichtung des Gestänges
- B -: erste Verschwenkrichtung des Betätigungselementes
- C -: Dekontaktierungsrichtung des Steckers
- D -: Drehrichtung des Gestänges
- E -: zweite Verschwenkrichtung des Betätigungselements

## Patentansprüche

1. Entnehmbarer Fahrzeugsitz mit einem Verriegelungsmechanismus (10, 6, 12) zum Verriegeln bzw. Entriegeln des Fahrzeugsitzes am Fahrzeugboden, einem Betätigungselement (9) zum Auslösen des Verriegelungsmechanismus, mindestens einer elektrischen und/oder pneumatischen Schnittstelle zu einer anderen Fahrzeugkomponente, wobei die Schnittstelle ein lösbares Steckerelement (13) aufweist, und mit einem Kontaktierungsmechanismus (16, 12, 21; 22, 28) zum Kontaktieren bzw. Dekontaktieren des Steckerelements (13),
**dadurch gekennzeichnet,**
**daß** der Kontaktierungsmechanismus (16, 12, 21; 22, 28) mit dem Verriegelungsmechanismus (10, 6, 12) derart zwangsgekoppelt ist, daß eine Entnahme oder ein Einsetzen des Fahrzeugsitzes in mindestens zwei zeitlich aufeinanderfolgenden Phasen erfolgt, wobei in der einen Phase ausschließlich eine Kontaktierung/Dekontaktierung des Steckerelements (13) und in der anderen Phase ausschließlich eine Verriegelung/Entriegelung des Fahrzeugsitzes stattfindet, und wobei zur Trennung der mindestens zwei Phasen Blockiermittel (6, 23b) vorgesehen sind, die während einer Kontaktierung/Dekontaktierung bzw. einer Verriegelung/Entriegelung den jeweils anderen Vorgang blockieren.

2. Entnehmbarer Fahrzeugsitz nach Anspruch 1, **dadurch gekennzeichnet, daß** die mindestens zwei zeitlich aufeinanderfolgenden Phasen der Entnahme oder des Einsetzens des Fahrzeugsitzes über entsprechende Betätigungsphasen des Betätigungselements (9) gesteuert und ausgelöst werden.

3. Entnehmbarer Fahrzeugsitz nach Anspruch 2, **dadurch gekennzeichnet, daß** die mindestens zwei zeitlich aufeinanderfolgenden Phasen durch eine mindestens zweiphasige Schwenkbewegung des Betätigungselementes (9) ausgelöst werden.

4. Entnehmbarer Fahrzeugsitz nach Anspruch 3, **dadurch gekennzeichnet, daß** die Schwenkbewegung des Betätigungselementes (9) bei beiden Schwenkphasen um die gleiche Schwenkachse erfolgt.

5. Entnehmbarer Fahrzeugsitz nach Anspruch 3, **dadurch gekennzeichnet, daß** die Schwenkbewegung des Betätigungselementes (9) bei den beiden Schwenkphasen um unterschiedliche Schwenkachsen erfolgt.

6. Entnehmbarer Fahrzeugsitz nach Anspruch 2, **dadurch gekennzeichnet, daß** die mindestens zwei zeitlich aufeinanderfolgenden Phasen durch eine Schwenkbewegung und eine lineare Bewegung, insbesondere Zieh- bzw. Drückbewegung, des Betätigungselementes (9) ausgelöst werden.

7. Entnehmbarer Fahrzeugsitz nach Anspruch 2, **dadurch gekennzeichnet, daß** die mindestens zwei zeitlich aufeinanderfolgenden Phasen durch zwei lineare Bewegungen des Betätigungselementes (9) ausgelöst werden.

8. Entnehmbarer Fahrzeugsitz nach mindestens einem der vorhergehenden Ansprüchen, **dadurch gekennzeichnet, daß** insgesamt vier zeitlich aufeinanderfolgenden Phasen bei der Entnahme des Fahrzeugsitzes vorliegen, wobei
a) in der ersten Phase ein vorhandenes Kontaktierungsspiel des Steckerelements (13) in der Schnittstelle durchschritten wird,
b) in der zweiten Phase eine Dekontaktierung des Steckerelements (13) erfolgt,
c) in der dritten Phase ein Sicherheitsspiel der Entriegelung durchschritten wird und
d) in der vierten Phase eine Entriegelung des Fahrzeugsitzes vom Fahrzeugboden erfolgt.

9. Entnehmbarer Fahrzeugsitz nach mindestens einem der vorangehenden Ansprüche, **dadurch gekennzeichnet, daß**
a) der Verriegelungsmechanismus an jeder Sitzschiene (1, 11) mindestens ein Verriegelungsteil (10) aufweist, das jeweils mit einem Befestigungsteil (6) des Fahrzeugbodens in Eingriff bringbar ist, wobei mindestens zwei Verriegelungsteile (10) der beiden Sitzschienen (1, 11) über ein Koppelelement, insbesondere ein Gestänge (12), miteinander verbunden sind,
b) der Kontaktierungsmechanismus Mittel (16, 12, 21) zum Anbringen bzw. Lösen des Steckerelements (13) an der Schnittstelle aufweist, und
c) die Verriegelungsteile (10) und die Mittel (16, 12, 21) zum Einführen bzw. Lösen des Steckerelements (13) beide mit dem Betätigungselement (9) gekoppelt sind, wobei Blockiermittel (6) derart vorgesehen sind, daß je nach Bewegungsphase des Betätigungselements (9) ausschließlich eine Verriegelung/Entriegelung oder eine Kontaktierung/Dekontaktierung erfolgt.

10. Entnehmbarer Fahrzeugsitz nach Anspruch 9, **dadurch gekennzeichnet, daß** das Koppelelement (12) sowohl drehbar als auch translatorisch verschiebbar ist und über einen Mitnehmer (16) derart mit dem Steckerelement (13) fest verbunden ist, daß
a) das Koppelelement (12) in einer ersten Bewegungsphase des Betätigungselements (9) translatorisch verschoben wird, wobei über den Mitnehmer (16) eine Dekontaktierung/Kontaktierung des Steckerelements (13) erfolgt und
b) das Koppelelement (12) in einer zweiten Bewegungsphase des Betätigungselements (9) gedreht wird, wobei die Verriegelungsteile (10) verschwenkt und der Sitz entriegelt/verriegelt wird.

11. Entnehmbarer Fahrzeugsitz nach Anspruch 10, **dadurch gekennzeichnet, daß** während der Dekontaktierungsphase eine Drehung des Koppelelements (12) und damit eine Entriegelung des Sitzes durch ein feststehendes Blockierelement (6) verhindert wird, an dem der Mitnehmer (16) solange anliegt, bis die Dekontaktierung abgeschlossen ist.

12. Entnehmbarer Fahrzeugsitz nach mindestens einem der Ansprüche 9 bis 11, **dadurch gekennzeichnet, daß** während einer Verriegelung/Entriegelung oder einer Kontaktierung/Dekontaktierung der jeweils andere Vorgang dadurch blockiert ist, daß der der jeweils anderen Phase zugeordnete Bewegungsfreiheitsgrad des Betätigungselements (9) blockiert ist.

13. Entnehmbarer Fahrzeugsitz nach mindestens einem der Ansprüche 9 bis 12, **dadurch gekennzeichnet, daß** in der Wirkverbindung zwischen dem Betätigungselement (9) und dem Steckerelement (13) Federmittel (21) vorgesehen sind, die eine Vorspannung auf das Steckerelement (13) zu dessen Kontaktierung in der Schnittstelle erzeugen.

14. Entnehmbarer Fahrzeugsitz nach mindestens einem der Ansprüche 9 bis 13, **dadurch gekennzeichnet, daß** die Wirkverbindung zwischen dem Betätigungselement (9) und dem Steckerelement (13) über ein mit dem Betätigungselement (9) verbundenes Zugmittel (19), etwa ein Zugseil oder eine Kette, hergestellt ist.

15. Entnehmbarer Fahrzeugsitz nach Anspruch 13 und 14, **dadurch gekennzeichnet, daß** das Zugmittel (19) an den Federmitteln (21) befestigt ist, wobei über das Betätigungselement (9) die Federmittel (21) gespannt/entspannt und dabei das Steckerelement (13) dekontaktiert/kontaktiert wird.

16. Entnehmbarer Fahrzeugsitz nach Anspruch 15 und mindestens einem der Ansprüche 10 bis 12, **dadurch gekennzeichnet, daß** die Federmittel (21) mit dem Koppelelement (12) verbunden sind und eine axiale Kraft auf dieses ausüben, so daß das Koppelelement (12) bei einer Betätigung des Betätigungselements (9) translatorisch verschoben wird und dementsprechend eine Kontaktierung/Dekontaktierung des Steckerelements (13) erfolgt.

17. Entnehmbarer Fahrzeugsitz nach Anspruch 16, **dadurch gekennzeichnet, daß** bei einer Entnahme des Sitzes das Betätigungselement (9)
a) in der ersten Bewegungsphase in einer ersten Verschwenkebene aufgeklappt und dabei die Federmittel (21) über das Zugmittel (19) gespannt werden, wobei eine Dekontaktierung des Steckerelements (13) erfolgt,
b) in der sich anschließenden zweiten Bewegungsphase in einer zur ersten Verschwenkebene im wesentlichen senkrechten zweiten Verschwenkebene gedreht wird, wobei die Verriegelungsteile (10) verschwenkt und der Sitz entriegelt wird.

18. Entnehmbarer Fahrzeugsitz nach mindestens einem der Ansprüche 9 bis 17, **dadurch gekennzeichnet, daß** der Betätigungshebel (9) derart in einer Kulisse geführt wird, daß die Betätigung des Betätigungshebels (9) in der ersten Bewegungsphase ab einem bestimmten Punkt nicht mehr zu einer weiteren Dekontaktierung des Steckerelements, sondern lediglich zu einer Verschiebung des Betätigungshebels in der Kulisse führt.

19. Entnehmbarer Fahrzeugsitz nach Anspruch 14, **dadurch gekennzeichnet, daß** das Betätigungselement (9) über einen Bowdenzug direkt mit dem Steckerelement (13) verbunden ist.

20. Entnehmbarer Fahrzeugsitz nach Anspruch 14 oder 19, **dadurch gekennzeichnet, daß** das Zugmittel (19) bzw. der Bowdenzug am Betätigungshebel (9) an einer Seilrolle befestigt ist.

21. Entnehmbarer Fahrzeugsitz nach Anspruch 20, **dadurch gekennzeichnet, daß** das Zugmittel (19) vor Befestigung an der Seilrolle über zwei Umlenkrollen geführt wird.

22. Entnehmbarer Fahrzeugsitz nach Anspruch 20 oder 21, **dadurch gekennzeichnet, daß** die Seilrolle eine vorstehende Nase aufweist, die in der zweiten Bewegungsphase des Betätigungselements (9) hinter einem festen Anschlag zur Anlage kommt und dadurch sicherstellt, daß das Betätigungselement (9) nicht aufgrund der Federvorspannung zurückschnappt.

23. Entnehmbarer Fahrzeugsitz nach Anspruch 21 oder 22, **dadurch gekennzeichnet, daß** die Seilrolle am Betätigungshebel (9) in einer Kulisse geführt wird, so daß der Betätigungshebel (9) in oder nach der zweiten Bewegungsphase zurückklappbar ist, ohne daß die Zugmittel (19) gespannt oder entspannt werden.

24. Entnehmbarer Fahrzeugsitz nach mindestens einem der vorangehenden Ansprüche, **dadurch gekennzeichnet, daß** dem lösbaren Steckerelement (13) eine karosseriefeste Steckeraufnahme (14) zugeordnet ist.

25. Entnehmbarer Fahrzeugsitz nach mindestens einem der vorangehenden Ansprüche, **dadurch gekennzeichnet, daß** das Steckerelement (13) und das Betätigungselement (9) an einer Sitzschiene (1, 11) befestigt sind.

26. Entnehmbarer Fahrzeugsitz nach mindestens einem der vorangehenden Ansprüche, **dadurch gekennzeichnet, daß** das Steckerelement (13) und das Betätigungselement (9) an verschiedenen Sitzschienen (1, 11) des Sitzes befestigt sind.

27. Entnehmbarer Fahrzeugsitz nach mindestens einem der vorangehenden Ansprüche, **gekennzeichnet durch** Abfragemittel, die bei Einsetzen des Sitzes ein ordnungsgemäßes Einrasten des Sitzes an allen Verriegelungsstellen kontrollieren.

## Claims

1. Removable vehicle seat with locking mechanism (10, 6, 12) for locking and unlocking the vehicle seat on the vehicle floor, operating element (9) for releasing the locking mechanism, at least one electric and/or pneumatic interface for another vehicle component, where the interface has a detachable connector element (13), and with a contacting mechanism (16, 12, 21; 22, 28) for contacting and disconnecting the connector element (13),
**characterised in that**
the contacting mechanism (16, 12, 21; 22, 28) is force-coupled to the locking mechanism (10, 6, 12) so that the removal or the insertion of the vehicle seat takes place in at least two successive time phases whereby in one phase only a contacting/disconnection of the connector element (13) takes place and in the other phase only a locking/unlocking of the vehicle seat takes place, and whereby in order to separate the at least two phases blocking means (6, 23b) are provided which during contacting/disconnection or locking/unlocking block each other process respectively.

2. Removable vehicle seat according to claim 1 **characterised in that** the at least two successive time phases of removal or insertion of the vehicle seat are controlled and released through corresponding operating phases of the operating element (9).

3. Removable vehicle seat according to claim 2 **characterised in that** the at least two successive time phases are released through an at least two-phase swivel movement of the operating element (9).

4. Removable vehicle seat according to claim 3 **characterised in that** the swivel movement of the operating element (9) takes place about the same swivel axis in both swivel phases.

5. Removable vehicle seat according to claim 3 **characterised in that** the swivel movement of the operating element (9) takes place about different swivel axes in the two swivel phases.

6. Removable vehicle seat according to claim 2 **characterised in that** the at least two successive time phases are released through a swivel movement and a linear movement, more particularly through traction or compression movement, of the operating element (9).

7. Removable vehicle seat according to claim 2 **characterised in that** the at least two successive time phases are released through two linear movements of the operating element (9).

8. Removable vehicle seat according to at least one of the preceding claims **characterised in that** overall there are four successive time phases during removal of the vehicle seat, namely
a) in the first phase passing through an existing contacting play of the connector element (13) in the interface
b) in the second phase disconnecting the connector element (13)
c) in the third phase passing through a safety play of the unlocking action and
d) in the fourth phase unlocking the vehicle seat from the vehicle floor.

9. Removable vehicle seat according to at least one of the preceding claims **characterised in that**
a) the locking mechanism has on each seat rail (1, 11) at least one locking part (10) which can each be brought into engagement with a fastening part (6) on the vehicle floor, wherein at least two locking parts (10) of the two seat rails (1, 11) are connected together through a coupling element, more particularly a rod linkage (12),
b) the contacting mechanism has means (16, 12, 21) for attaching and releasing the connector element (13) at the interface, and
c) the locking parts (10) and the means (16, 12, 21) for inserting and releasing the connector element (13) are both coupled to the operating element (9) wherein blocking means (6) are provided so that depending on the movement phase of the operating element (9) only locking/unlocking or only contacting / disconnecting takes place.

10. Removable vehicle seat according to claim 9 **characterised in that** the coupling element (12) can be moved both in rotation and in translation and is fixedly connected to the connector element (13) through a follower (16) so that
a) the coupling element (12) is moved in translation in a first movement phase of the operating element (9) so that disconnection/contacting of the connector element (13) takes place through the follower (16) and
b) the coupling element (12) is rotated in a second movement phase of the operating element (9) so that the locking parts (10) are swivelled and the seat becomes unlocked/locked.

11. Removable vehicle seat according to claim 10 **characterised in that** during the disconnecting phase rotation of the coupling element (12) and thus unlocking of the seat are prevented through a fixed blocking element (6) against which the follower (16) is supported until disconnection has been completed.

12. Removable vehicle seat according to at least one of claims 9 to 11 **characterised in that** during locking/unlocking or during contacting/disconnection each other process is blocked **in that** the degree of freedom of movement of the operating element (9) associated with each other phase is blocked.

13. Removable vehicle seat according to at least one of claims 9 to 12 **characterised in that** spring means (21) are provided in the active connection between the operating element (9) and the connector element (13) to produce pretension on the connector element (13) to ensure contact in the interface

14. Removable vehicle seat according to at least one of claims 9 to 13 **characterised in that** the active connection between the operating element (9) and the connector element (13) is produced through a draw member (19), such as a draw cable or chain, connected to the operating element (9).

15. Removable vehicle seat according to claims 13 and 14 **characterised in that** the draw member (19) is fixed on the spring means (21) and the spring means (21) are tensioned/relaxed through the operating element (9) so that the connector element (13) is disconnected/contacted.

16. Removable vehicle seat according to claim 15 and at least one of claims 10 to 12 **characterised in that** the spring means (21) are connected to the coupling element (12) and exert an axial force on same so that during activation of the operating element (9) the coupling element (12) is moved in translation and thus contacting/disconnection of the connector element (13) takes place.

17. Removable vehicle seat according to claim 16 **characterised in that** during removal of the seat the operating element (9)
a) in the first movement phase is lifted up in a first swivel plane so that the spring means (21) thereby become tensioned through the draw member (19) and the connector element (13) becomes disconnected,
b) in the following second movement phase is turned in a second swivel plane substantially perpendicular to the first swivel plane so that the locking parts (10) are swivelled and the seat becomes unlocked.

18. Removable vehicle seat according to at least one of claims 9 to 17 **characterised in that** the operating element (9) is guided in a slide guide so that the operation of the operating lever (9) in the first movement phase from a certain point no longer leads to further disconnection of the connector element but only to displacement of the operating lever in the slide guide.

19. Removable vehicle seat according to claim 14 **characterised in that** the operating element (9) is connected directly to the connector element (13) through a Bowden cable.

20. Removable vehicle seat according to claim 14 or 19 **characterised in that** the draw member (19) or Bowden cable is fixed on a cable pulley on the operating lever (9).

21. Removable vehicle seat according to claim 20 **characterised in that** the draw member (19) is guided over two guide rollers prior to fixing on the cable pulley.

22. Removable vehicle seat according to claim 20 or 21 **characterised in that** the cable pulley has a protruding nose which in the second movement phase of the operating element (9) comes to bear behind a fixed stop to thereby ensure that the operating element (9) does not snap back as a result of the spring tension.

23. Removable vehicle seat according to claim 21 or 22 **characterised in that** the cable pulley is guided on the operating element (9) in a slide guide so that the operating lever (9) can be turned back in or after the second movement phase without the draw member (19) being tensioned or relaxed.

24. Removable vehicle seat according to at least one of the preceding claims **characterised in that** the releasable connector element (13) is associated with a connector socket (14) fixed on the body.

25. Removable vehicle seat according to at least one of the preceding claims **characterised in that** the connector element (13) and the operating element (9) are fixed on one seat rail (1, 11).

26. Removable vehicle seat according to at least one of the preceding claims **characterised in that** the connector element (13) and the operating element (9) are fixed on different seat rails (1, 11) of the seat.

27. Removable vehicle seat according to at least one of the preceding claims **characterised by** interrogation means which during insertion of the seat monitor proper engagement of the seat at all locking points.

## Revendications

1. Siège de véhicule amovible avec un mécanisme de verrouillage (10,6,12) pour le verrouillage ou le déverrouillage du siège du véhicule sur le plancher du véhicule, un élément d'actionnement (9) pour libérer le mécanisme de verrouillage, au moins une interface électrique et/ou pneumatique avec un autre composant du véhicule, l'interface présentant un élément connectable détachable (13), et avec un mécanisme de mise en contact (16,12,21;22,28) pour la mise en contact ou hors contact de l'élément connectable (13),
**caractérisé en ce que**,
le mécanisme de mise en contact 516,12,21; 22,28) est accouplé par force au mécanisme de verrouillage (10,6,12) de telle sorte qu'un enlèvement ou une mise en place du siège de véhicule s'effectue en au moins deux phases temporellement successives, moyennant quoi dans une phase a lieu exclusivement une mise en contact/mise hors contact de l'élément connectable (13) et dans l'autre phase a lieu exclusivement un verrouillage/déverrouillage du siège du véhicule, et moyennant quoi pour la séparation d'au moins les deux phases sont prévus des moyens de blocage (6,23b) qui, pendant une mise en contact/hors contact ou un verrouillage/déverrouillage bloquent respectivement l'autre opération.

2. Siège de véhicule amovible selon la revendication 1, **caractérisé en ce que**, les au moins deux phases successives de l'enlèvement ou de la mise en place du siège de véhicule sont commandées et déclenchées par le biais des phases d'actionnement correspondantes de l'élément d'actionnement (9).

3. Siège de véhicule amovible selon la revendication 2, **caractérisé en ce que** les au moins deux phases temporellement successives sont déclenchées par un mouvement de basculement au moins en deux phases de l'élément d'actionnement (9).

4. Siège de véhicule amovible selon la revendication 3, **caractérisé en ce que** le mouvement de basculement de l'élément d'actionnement (9) s'effectue autour du même axe de basculement pour deux phases de basculement.

5. Siège de véhicule amovible selon la revendication 3, **caractérisé en ce que** le mouvement de basculement de l'élément d'actionnement (9) s'effectue autour d'axes de basculement différents pour les deux phases de basculement.

6. Siège de véhicule amovible selon la revendication 2, **caractérisé en ce que** les au moins DEUX phases successives temporellement sont déclenchées par un mouvement de basculement et un mouvement linéaire, en particulier un mouvement de traction ou de poussée de l'élément d'actionnement (9).

7. Siège de véhicule amovible selon la revendication 2, **caractérisé en ce que** les au moins deux phases temporellement successives sont déclenchées par deux mouvements linéaires de l'élément d'actionnement (9).

8. Siège de véhicule amovible selon au moins l'une des revendications précédentes, **caractérisé en ce qu'**il existe au total quatre phases temporellement successives pour l'enlèvement du siège du véhicule, moyennant quoi
a) dans la première phase, il est franchi un jeu de mise en contact existant de l'élément connectable (13) dans l'interface,
b) dans la seconde phase s'effectue une mise hors contact de l'élément connectable (13).
c) dans la troisième phase, il est franchi un jeu de sécurité du déverrouillage et
d) dans la quatrième phase s'effectue un déverrouillage du siège du véhicule depuis le plancher du véhicule.

9. Siège de véhicule amovible selon au moins l'une des revendications précédentes, **caractérisé en ce que**
a) le mécanisme de verrouillage présente sur chaque rail de siège (1,11) au moins une partie de verrouillage (10), laquelle peut être respectivement mise en prise avec une partie de fixation (6) du plancher du véhicule, moyennant quoi au moins deux parties de verrouillage (10) des deux rails de siège (1,11) sont raccordées entre elles par l'intermédiaire d'un élément d'accouplement, en particulier une tige (12),
b) le mécanisme de mise en contact présente des moyens (16,12,21) pour l'application ou le détachement de l'élément connectable (13) sur l'interface, et
c) les parties de verrouillage (10) et les moyens (16,22,21) pour l'introduction ou le détachement de l'élément connectable (13) sont tous deux accouplés à l'élément d'actionnement (9), moyennant quoi des moyens de blocage (6) sont prévus de telle sorte que chaque fois après une phase de mouvement de l'élément d'actionnement (9) il est produit exclusivement un verrouillage/déverrouillage ou une mise en contact/mise hors contact.

10. Siège de véhicule amovible selon la revendication 9, **caractérisé en ce que** l'élément d'accouplement (12) est déplaçable aussi bien en rotation qu'en translation et est raccordé solidement par un organe d'entraînement (16) avec l'élément connectable (13) de telle sorte que
a) l'élément d'accouplement (12) est déplacé dans une première phase de mouvement de l'élément d'actionnement (9) en translation, tandis que par l'organe d'entraînement (16) s'effectue une mise hors contact/ mise en contact de l'élément connectable (13) et
b) l'élément d'accouplement (12) est mis en rotation dans une deuxième phase de mouvement de l'élément d'actionnement, tandis que les parties de verrouillage (10) sont basculées et le siège est déverrouillé/verrouillé.

11. Siège de véhicule amovible selon la revendication 10, **caractérisé en ce que** pendant la phase de mise hors contact une rotation de l'élément d'accouplement (12) est empêchée par un élément de blocage fixe (6) et de ce fait, un déverrouillage du siège, élément de blocage fixe sur lequel est appliqué l'organe d'entraînement (16) jusqu'à la fermeture de la mise hors contact.

12. Siège de véhicule amovible selon au moins l'une des revendications 9 à 11, **caractérisé en ce que** pendant un verrouillage/déverrouillage ou une mise en contact/mise hors contact, l'autre opération respective est bloquée par le fait que le degré de liberté de mouvement de l'élément d'actionnement (9) affecté respectivement à l'autre phase, est bloqué.

13. Siège de véhicule amovible selon au moins l'une des revendications 9 à 12, **caractérisé en ce que** dans la liaison effective entre l'élément d'actionnement (9) et l'élément connectable (13) sont prévus des moyens à ressort (21) qui produisent une précontrainte sur l'élément connectable (13) pour sa mise en contact dans l'interface.

14. Siège de véhicule amovible selon au moins l'une des revendications 9 à 13, **caractérisé en ce que** la liaison effective entre l'élément d'actionnement (9) et l'élément connectable (13) est établie par l'intermédiaire d'un élément de traction (19) raccordé à l'élément d'actionnement (9), par exemple un câble de traction ou une chaîne.

15. Siège de véhicule amovible selon la revendication 13 et 14, **caractérisé en ce que** le moyen de traction (19) est fixé sur les moyens à ressort (21), moyennant quoi les moyens à ressort (21) sont tendus/détendus par l'intermédiaire de l'élément d'actionnement (9) et ainsi l'élément connectable (13) est mis en contact/hors contact.

16. Siège de véhicule amovible selon la revendication 15 et au moins l'une des revendications 10 à 12, **caractérisé en ce que** les moyens à ressort (21) sont raccordés à l'élément d'accouplement (12) et exercent une force axiale sur ceux-ci, de sorte que lors d'un actionnement de l'élément d'actionnement (9), l'élément d'accouplement (12) est déplacé en translation et par conséquent, il se produit une mise en contact / mise hors contact de l'élément connectable (13).

17. Siège de véhicule amovible selon la revendication 16, **caractérisé en ce que**, lors d'un enlèvement du siège, l'élément d'actionnement (9)
a) est rabattu dans la première phase de mouvement dans un premier plan de basculement et ainsi les éléments à ressort (21) sont tendus par le moyen de traction (19), moyennant quoi il est produit une mise hors contact de l'élément connectable (13),
b) est mis en rotation dans la deuxième phase de mouvement dans un deuxième plan de basculement sensiblement perpendiculaire au premier plan de basculement, moyennant quoi les parties de verrouillage (10) sont basculées et le siège est déverrouillé.

18. Siège de véhicule amovible selon au moins l'une des revendications 9 à 17, **caractérisé en ce que** le levier d'actionnement (9) est mené dans une glissière de telle sorte que l'actionnement du levier d'actionnement (9) dans la première phase de mouvement à partir d'un point déterminé ne donne plus lieu à une autre mise hors contact de l'élément connectable, mais uniquement à un déplacement du levier d'actionnement dans la glissière.

19. Siège de véhicule amovible selon la revendication 14, **caractérisé en ce que** l'élément d'actionnement (9) est raccordé directement à l'élément connectable (13) par un câble Bowden.

20. Siège de véhicule amovible selon la revendication 14 ou 19, **caractérisé en ce que** le moyen de traction (19) ou le câble Bowden est fixé sur le levier d'actionnement (9) sur une poulie.

21. Siège de véhicule amovible selon la revendication 20, **caractérisé en ce que** le moyen de traction (19) est guidé par deux rouleaux de renvoi avant la fixation sur la poulie.

22. Siège de véhicule amovible selon la revendication 20 ou 21, **caractérisé en ce que** la poulie présente un appendice en saillie qui, dans la deuxième phase de mouvement de l'élément d'actionnement (9), vient en appui derrière une butée fixe et empêche ainsi que l'élément d'actionnement (9) ne vienne se rabattre en raison de la précontrainte du ressort.

23. Siège de véhicule amovible selon la revendication 21 ou 22, **caractérisé en ce que** la poulie sur le levier d'actionnement (9) est guidée dans une glissière de sorte que le levier d'actionnement (9) est rabattable pendant ou après la première phase de mouvement sans que les moyens de traction (19) ne soient tendus ou détendus.

24. Siège de véhicule amovible selon au moins l'une des revendications précédentes, **caractérisé en ce qu'**un logement d'élément connectable (14) solidaire de la carrosserie est affecté à l'élément connectable détachable (13).

25. Siège de véhicule amovible selon au moins l'une des revendications précédentes, **caractérisé en ce que** l'élément connectable (13) et l'élément d'actionnement (9) sont fixés sur un rail de siège (1,11).

26. Siège de véhicule amovible selon au moins l'une des revendications précédentes, **caractérisé en ce que** l'élément connectable (13) et l'élément d'actionnement (9) sont fixés sur différents rails de siège (1,11).

27. Siège de véhicule amovible selon au moins l'une des revendications précédentes, **caractérisé par** des moyens d'interrogation qui, lors de la mise en place du siège, contrôlent le bon encliquetage sur tous les points de verrouillage.
